# EUROPEAN PATENT SPECIFICATION

(11) **EP 1 552 654 B1**
(45) Date of publication and mention of the grant of the patent: **12.03.2008**
(21) Application number: 03793793.5
(22) Date of filing: 03.09.2003
(51) Int. Cl.: H04L 12/56

(54) **METHOD AND APPARATUS FOR PROVIDING MULTICAST CAPABILITY WITHIN AN ATM NETWORK**
VERFAHREN UND VORRICHTUNG ZUR BEREITSTELLUNG VON MULTICAST-FÄHIGKEIT IN EINEM ATM-NETZWERK
PROCEDE ET DISPOSITIF PERMETTANT D'OBTENIR UNE CAPACITE DE MULTIDIFFUSION DANS UN RESEAU A MODE DE TRANSFERT ASYNCHRONE

(30) Priority: 03.09.2002 US 407818 P
(43) Date of publication of application: 13.07.2005
(73) Proprietor: Nokia Siemens Networks GmbH & Co. KG, 81541 München (DE)
(72) Inventor: KRISTOFEK, Charles, Orlando, FL 32817 (US)
(86) International application number: PCT/EP2003/009776
(87) International publication number: WO 2004/023739

(56) References cited:
- EP-A- 0 982 899
- EP-A- 1 330 069
- WO-A-01/54354
- US-B1- 6 262 984

## Description

### BACKGROUND

### Field of the Invention.

The present invention relates to defining procedures to achieve a leaf initiated join to broadcast/multicast connections and, more particularly, provide multicast video over an ATM core network via dynamic connections initiated by IGMP requests.

### Related Information.

Access interfaces, such as cable TV, satellite provide content to the user. Whereas, connection technologies, such as asymmetric digital subscriber line (ADSL), and very high speed digital subscriber line (VDSL), Ethernet, wireless, etc, provide the connectivity that delivers the content to the user interface. However, the current connection technologies cannot provide the entire spectrum of analog and digital TV to the user interface.

In the case of connectivity, industry has chosen internet protocol (IP) for the control plane. This implies IGMP for broadcast requests. The problem, which will be described later on, is that there is no satisfactory procedure for establishing the broadcast/multicast connection.

The distribution of consumer video can be segmented into two architectures. In the first architecture, the entire spectrum of video, both analog and digitally encoded video channels are broadcast directly to the consumer premise. This spectrum typically includes 60 analog and 50+ digital video channels. This architecture is supported by cable television and satellite to the home operators. In the second architecture, the interface to the consumer cannot support the entire spectrum of analog and digitally encoded video. Interfaces such as ADSL, ADSL+, VDSL, and 10/100baseT Ethernet can provide a handful of digital video streams MPEG-2/4 simultaneously.

In the second architecture, the market has embraced IP as the transport and control infrastructure. An end-to-end IP network solution does not provide QoS guarantees. An end-to-end ATM solution, while providing QoS, would require CPE equipment which contained ATM signaling capabilities. This is an expensive proposition. Also, the market has embraced IP in the CPE arena for the second network architecture. An IP user interface and ATM core network architecture provides a solution which meets QoS needs with low cost CPE desires. The rest of this section focuses this architecture.

VDSL is based on digital subscriber line (DSL) technology. A standard telephone installation in the United States consists of a pair of copper wires that the phone company installs in your home. Voice signals use only a fraction of the available capacity on the pair of wires. DSL exploits this remaining capacity to carry information on the wire without disturbing the line's ability to carry conversations. Standard phone service limits the frequencies that the switches, telephones and other equipment can carry. Human voices, speaking in normal conversational tones, can be carried in a frequency range of 400 to 3,400 Hertz (cycles per second). In most cases, the wires themselves have the potential to handle frequencies of up to several-million Hertz. Modern equipment that sends digital (rather than analog) data can safely use much more of the telephone line's capacity, and DSL does just that. VDSL can transmit as high as 52 Mbps downstream (to the home) and 16 Mbps upstream (from the home). That is much faster than its cousin asymmetric subscriber line (ADSL), which provides up to 8 Mbps downstream and 800 Kbps (kilobits per second) upstream. Essentially, VDSL uses two pieces of equipment, a transceiver and a digital subscriber line access multiplexer (DSLAM) The transceiver, is located at the customer's side and is the point where data from the user's computer or network is connected to the DSL line. The transceiver can connect to a customer's equipment in several ways, though most residential installation uses Universal Serial Bus(USB) or 10BaseT Ethernet connections.

The DSLAM is located at the access provider and is the equipment that gives VDSL its power. A DSLAM takes connections from many customers and aggregates them onto a single, high-capacity connection to the Internet. DSLAMs are generally flexible and able to support multiple types of DSL, as well as provide additional functions such as routing and dynamic IF Address assignment for customers. Now that the telephone companies are replacing many of their main feeds with fiber-optic cable, VDSL is becoming more of a reality.

This has exciting prospects for point-to-multi-point connections, so-called multicast connections. Multicast is communication between a single sender and multiple receivers on a network and is one of the packet types defined by the Internet Protocol. Multicasting allows one computer on the Internet to send content to multiple other computers that have identified themselves as interested in receiving the originating computer's content. In this invention, multicasting is used in the sense of "broadcasting" high-bandwidth programs of streaming media to an audience that has "tuned in" by setting up a multicast group membership.

The end connection of a multicast connection terminates in a Set Top Box (STB). STB allows the user to select from among any number of channels of the channel lineup. It enables a television set to receive and decode digital television (DTV) steams.

STBs employ an Internet Protocol (IP) network technology, typically the Internet Group Management Protocol, that provides a way for an Internet computer to report its multicast group membership to adjacent routers. Using the Open Systems Interconnection (OSI) communication model, IGMP is part of the Network Layer and is formally described in the Internet Engineering Task Force (IETF) Request for Comments (RFC) 2236.

As earlier mentioned, the problem is that IP protocols do not guarantee a Quality of Service (QoS). QoS is the idea that transmission rates, error rates, and other characteristics can be measured, improved, and, to some extent, guaranteed in advance. QoS is of particular concern for the continuous transmission of high-bandwidth video and multimedia information. Transmitting this kind of content dependably is difficult in public networks using ordinary "best effort" protocols.

Asynchronous Transfer Mode (ATM), on the other hand, allows a company or user to pre-select a level of quality in terms of service. ATM is a dedicated-connection switching technology that organizes digital data into 53-byte cell units and transmits them over a physical medium using digital signal technology. Individually, a cell is processed asynchronously relative to other related cells and is queued before being multiplexed over the transmission path. ATM allows QoS to be measured and guaranteed in terms of the average delay at a gateway, the variation in delay in a group of cells, cell losses, and the transmission error rate.

It would be advantageous, therefore, to provide a manner in which to implement ATM with an STB. Additionally, ATM is designed to be easily implemented by hardware (rather than software), faster processing and switch speeds are possible.

The UNI signaling standards provide call/connection control procedures for point-to-multipoint (P2MP) calls. The signaling specification supports point-to-multipoint calls where information is multicasted unidirectionally from one calling user to a set of called users. The calling user is also referred to as the Root; the called users are also referred to as Leaves. Heretofore, the UNI 4.0 standard, an ATM signaling standard, proposed to provide a leaf initiated join (LIJ) to initiate broadcast connection. However, the UNI 4.0 LIJ solution was never widely deployed and is omitted in UNI 4.1.

What is more, the 'Leaf Setup Request' message of UNI 4.0 is not supported by the Private Network-Network interface (PNNI) of ATM (document number af-pnni-0055.002, April 2002) that defines the protocols between switches. The PNNI routing protocol distributes network topology information so that paths can be computed to any addressed destination. Whilst the PNNI signaling protocol provides for the establishment and takedown of point-to-point and point-to-multipoint connections, without 'Leaf Setup Request' message support, initiating a broadcast connection from a leaf is not possible.

Further more, UNI provides the use of permanent virtual circuits (PVCs), a provisioned permanent logical connection in a network, which can be used to provide broadcast content from end-to-end. However, PVCs are not scalable from a management configuration viewpoint.

Nor do PVCs allow for efficient bandwidth allocation. They are pretty much static devices in this respect and are not reconfigurable. An ATM network using PVCs to provide broadcast content quickly exhausts inter-nodal interface bandwidth capacity. Thus limiting the number of broadcasts offered to a leaf or user.

### OBJECTS & SUMMARY OF THE INVENTION

It is an object of the invention to provide for a leaf initiated point-to-multi-point connection.

It is an object of the invention to provide for a leaf initiated point-to-multi-point connection, particularly within an ATM network via ATM signaling

It is an object of the invention to provide an IGMP to UNI translation and a UNI call sequence to indicate when and where a multicast stream should be provided.

It is an object of the invention to provide QoS to a point-to-multipoint connection.

It is an object of the invention to provide scalability to a point-to-multipoint connection.

It is an object of the invention to provide an efficient manner in which to transmit the broadcast streams.

It is an object of the invention to provide IP protocol signaling in an ATM network for point-to-multipoint connections.

In accordance with these and other objectives, the invention provides a method for a leaf initiated point-to-multi-point connection, particularly within an ATM network via ATM signaling. A Setup message is sent from the leaf to an end point to request to join a known multicast/broadcast. Routing information is inserted into the Setup message for return routing to the leaf. The end point, or Root, originates a point to multi-point call to the leaf using the routing information inserted into the Setup message. The leaf initiated Setup message is rejected by the Root endpoint.

In addition, an apparatus is provided for establishing a leaf initiated point-to-multi-point connection within an ATM network via ATM signaling. A leaf generates a Setup message to request to join a known multicast/broadcast, wherein the leaf inserts into the Setup message routing information for return routing to the leaf. An endpoint, or Root, receives the Setup message and originates a point to multi-point call to the leaf using the routing information inserted into the Setup message, wherein the Root endpoint rejects the leaf initiated Setup message.

### BRIEF DESCRIPTION OF THE DRAWINGS

The invention shall be described with reference to the following drawings in which at least one example of the invention shown:
Figure 1 is a block diagram of the invention;
Figure 2 is a flow signal diagram of the invention;
Figure 3 is a flow signal diagram of the invention; and
Figure 4 is a scaled block diagram of the invention.

### DETAILED DESCRIPTION OF THE PREFERRED EMBODIMENTS

The present invention proposes to use ATM to provide leaf initiated join to broadcast connections, particularly for an ATM network via ATM signaling. In one aspect, the invention is applied to video broadcasts. A proposal offered herein in order to realize the invention for video broadcasts is to provide IGMP requests of multicast video over an ATM core network with dynamic connections. The instant solution resolves the aforementioned problems. In particular, the invention corrects the failure of the UNI 4.0 by providing a leaf initiated join that works.

The UNI 4.0 standard was proposed to 'leaf initiated join to broadcast connections', but the standard is inadequate because it fails to define any procedures to do so and is subsequently being removed in the next version, UNI 4.1.
This invention proposes those procedures. Of course, the invention is not so limited to the UNI standard. More broadly, this invention relates to providing signaling of multicast video. More specifically, the invention provides signaling of multicast video over an ATM core network.

The invention further allows for the satisfactory means or method by which a DSLAM can facilitate STB's IGMP multicast requests within an ATM core network, i.e., to allow QoS management in such a network. A solution that is both efficient so as to be able to be supported by the network and scalable is herein provided.

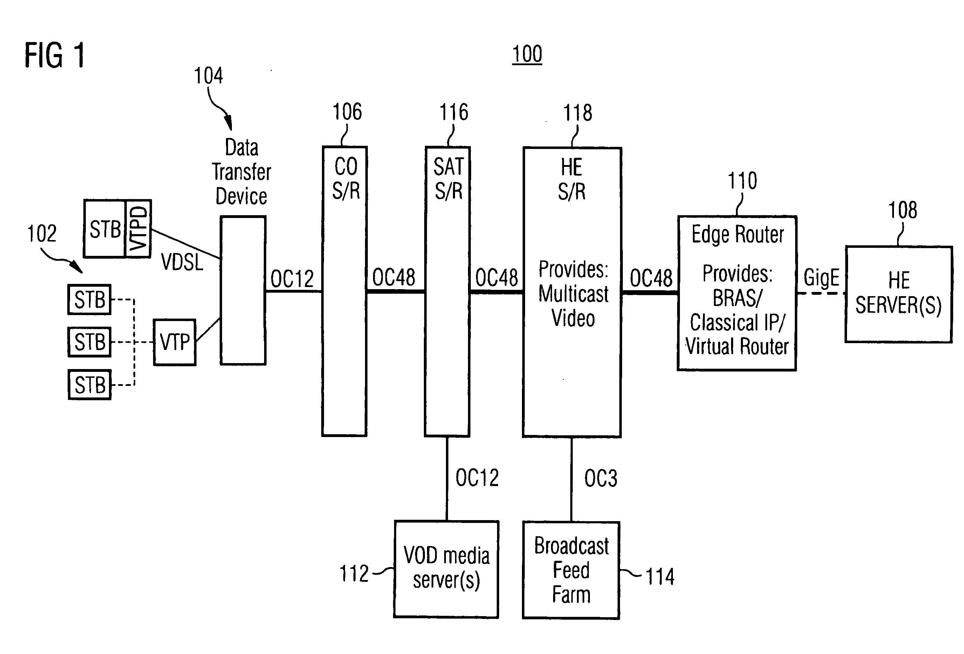

The inventive solution shall be explained with reference to Figure 1. Therein, a network 100 is shown for point-to-multipoint broadcast. It will be appreciated that the overall invention relates to initiating a leaf join, although the more specific implementation for a broadcast of video is shown in the figure.

In summary, one or more set top boxes (STB) 102 are coupled via a data transfer device 104, such as a digital subscriber line access multiplexer (DSLAM), to a central office (C/O) switch router (S/R) 106. A STB forming part of a leaf that shall initiate the join broadcast connection. A head end (HE) server, coupled to the network 100 via an edge router 110, is provided to route the video streams from a broadcast source, such as a video on demand (VOD) media server 112 or a broadcast feed farm 114. The VOD media server 112 and broadcast feed farm 114 are coupled to the network 100 through a satellite switch router (SAT S/R) and a head end switch router (HE S/R), respectively.

In one aspect, the network 100 is an ATM network. The STBs 102 connected to the network 100, are of a different protocol, such as an IP protocol. The purpose of the invention is to initiate at a leaf, i.e., one of the STBs 102, a join of a broadcast connection.

In the context of the present invention, a STB may be any device that allows the user to select from among a number of channels. A STB may include a specialized computer that can "talk to" the Internet, and may include a Web browser therefor (a Hypertext Transfer Protocol client) and the Internet's main program, TCP/IP. In the DTV realm, a typical digital set-top box contains one or more microprocessors for running the operating system, possibly Linux or Windows CE, and for parsing the MPEG transport stream. A set-top box may also include RAM, an MPEG decoder chip, or more chips for audio decoding and processing. More sophisticated set-top boxes contain a hard drive for storing recorded television broadcasts, for downloaded software, and for other applications provided by your DTV service provider.

In terms of this application, the head end is the facility at the broadcasting point that originates and communicates the broadcasts. These may include local cable TV office that offers cable TV services and cable modem services to subscribers. In distributing cable television services, the head-end may also include a satellite dish antenna for receiving incoming programming. This programming is then passed on to the subscriber. Normally, all signals are those that are sent downstream to the subscriber, but some are received upstream such as when a customer requests a video on demand program. The HE server 108, by operation of the HE S/R 118, provides control, i.e., selection and routing, over the video streams.

The data transfer device 104 of the present invention may be a DSLAM. Such a DSLAM may be realized by the Siemens TM Accession device. A DSLAM is a network device, usually at a company central office, that receives signals from multiple customer Digital Subscriber Line (DSL) connections and puts the signals on a high-speed backbone line using multiplexing techniques. DSLAM multiplexers connect DSL lines with some combination of asynchronous transfer mode (ATM), frame relay, or Internet Protocol networks.

In overview, the data transfer device 104 is modified to accept STB IGMP requests to join and leave multicast video streams, the data transfer device 104 is modified to translate the received IGMP to appropriate ATM signaling sequences as specified herein. The data transfer device 104 is modified to send a message to the Root end point, or broadcasting end, to request access to a particular broadcast. In the specific example shown in Figure 1, this means that the data transfer device 104 will insert routing information necessary for routing the broadcast stream back toward the requesting data transfer device, i.e., the leaf. In another aspect of the invention, the prefix, if necessary, for routing is known to the data transfer device 104. In the context of the aspect of the invention, wherein the data transfer device 104 utilizes an IP protocol, such IGMP, the data transfer device 104 of the invention inserts an HE S/R address into an ATM signal, which is forwarded over the ATM network. This will be explained in more detail with respect to message flows.

Thus, the invention provides special provisioning of the data transfer device 104. In the case of IGMP, the invention stores in the data transfer device 104 the HE S/R Network Prefix (for example, 39-1111-223344556677889900-01) for the broadcast video application. In another aspect of the invention, the addressing information is sent to the data transfer device 104 from the head end, embedded in an ATM signal.

In terms of Accession, the present invention prescribes provisioning specific to the Accession technology. It shall be appreciated, however, that the Accession provisioning described here is merely for completeness of explanation and that any of the following provisions may be applied or not, or that another provisioning entirely, is within the scope of the invention. The VDSL line on the Accession will need one IGMP VBRnrt PVC provisioned from the line to the line card SAR. The VDSL line on the Accession will need 3 "reserved" video stream PVCs (1/10, 1/11, 1/12) (defaulted). The Accession should provide a configurable timer T-channel_long set to, for example, 4 seconds.

The invention further proposes to modify the HE S/R 118 to receive requests to join a broadcast connection via a UBR Setup and to respond with an "Add Party" or Point-to-multipoint Setup message. In one aspect of the invention, in particular relation to ATM, the HE S/R 118 rejects the UBR Setup request. Notwithstanding, HE S/R 118 strips the routing information from the request and constructs therewith the "Add Party" or Point-to-multipoint Setup

For the aspect shown in Figure 1, the invention provisions the HE S/R 118. The HE S/R should have PVCs (not shown), which would be coupled to the head end, provisioned that contain and supply broadcast content. This content may be video, audio, or data. The content PVCs are assigned an ATM end system address (AESA). The AESA of the content PVC should support all ATM format addressing types (e.g. DCC, ICD, E.164). A content PVC should also have associated traffic descriptors in order to establish the peak cell rate. The HE S/R should also provide a configurable timer T-channel_short, which may be set to, for example 3 seconds.

As will be explained in reference to message flows, the Accessions can address these content PVCs by inserting the IGMP requested Class D address into a UNI called party IE AESA.

In addition, or in the alternative, the HE S/R 118 broadcast procedure capabilities may also be available in the CO and SAT S/Rs 106, 116.

Now in operation, the invention shall be described with reference to Figure 1 in terms of an IGMP controlled broadcast video in an ATM network. The control of authorized broadcast video is requested by the STB 102 via IGMP. A middleware authentication process may provide the STB with a user profile containing authorized broadcast channels (class D addresses). The STB 102 will perform logical multicast. The STB 102 uses an authentication PVC (not shown) to transmit IGMP reports and leaves. In more detail, the authentication PVC is a PPPoE connection between the STB and the Accession VDSL line card.

The data transfer device 104 coordinates received reports and leaves on the shelf and communicates with the HE S/R 118 when a new broadcast video stream is needed. The data transfer device 104 launches the UBR Setup message towards the HE S/R 118 to request a new broadcast video stream. As will be explained below, the UBR Setup message should request an unspecified bit rate (UBR) ATM Traffic Descriptor, with parameters set to optimize the core ATM network call admission control resource reservation. For each received UBR Setup message, the HE S/R 118 launches the appropriate Point-to-Multipoint connection.

The HE S/R line card attempts to honor each request and then can abandon the effort. The Accession can re-attempt if need be. When a particular broadcast video stream is no longer needed on the shelf the data transfer device 104 drops the point-to=multipoint call with a Release message. The data transfer device 104 preferably stores the requests to the HE S/R 118 that are outstanding and then can dispense with P2MP calls if no user needs the channel.

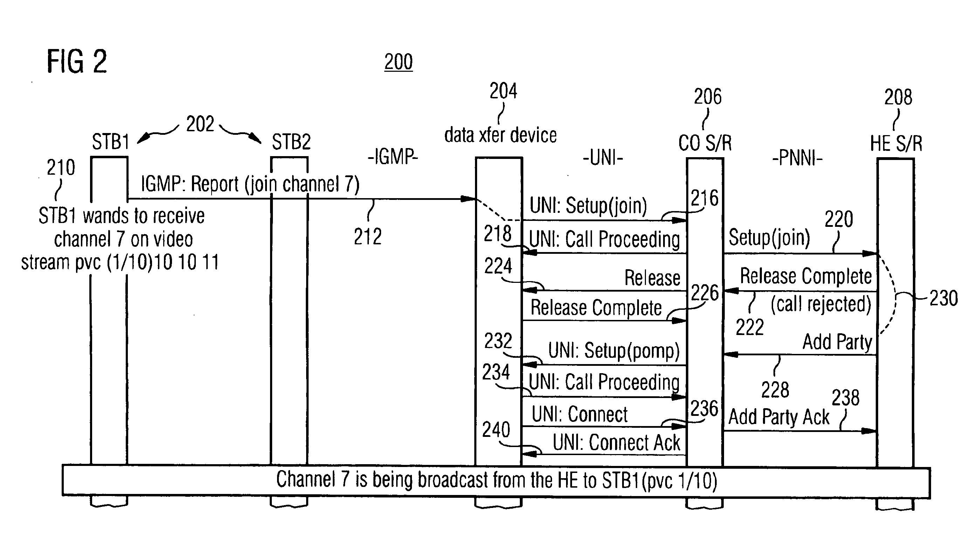

The process by which the leaf initiated join to broadcast connection is established shall be better understood in reference to the signal flow diagram 200 of Figure 2. Figure 2 shows the message flow to provide a broadcast channel that is not already available locally on the data transfer device 102. Two STBs 202 are depicted as well as the data transfer device 204, the CO S/R 206 and the HE S/R 208. The procedure is embodied by the flow of the signals, which may also be thought of as steps.

In this example, assume that the user wants to access channel 7 on a particular video stream. An STB 202 of a particular leaf receives a user request in step 210, via RF remote for example, an authorized broadcast channel. In response, the STB 202 sends an IGMP report in step 212. The report may comprise, for example a source IP address, such as an ID of video stream PVC IP address (e.g. 10.10.1.1.), and/or a destination IP address, such as a class D address of channel (e.g. 225.0.0.7, channel 7). There may also be defined a group address, e.g., 225.0.0.7, which in this example is the same as the class D address. Thus, the join request is initiated.

In step 214, the data transfer device VDSL line card translates the received join and informs the Integrated Access Controller (IAC) (the main redundant processor card on the data transfer device, which has an uplink interface) of the channel request. In this example, the source IP address may be translated to line card/port/vpi/vci.

The IAC aggregates channel requests from VDSL line cards in lists. Each channel request will result in a Setup message being sent toward the HE S/R 208 as in step 216 (If the requested channel is not already being received by the data transfer device). As previously stated, the Setup message has, in one aspect, a UBR traffic type in order to optimize core network resource reservation. As will be explained, the Setup message will eliminate CAC resources being consumed within the ATM network. In addition, the Setup message should provide the calling and/or called number to the HE.

With the routing information in the Setup message, the HE will know which data transfer device 204 to provide the video broadcast stream from, for example, the calling number received. The HE will know which channel is being requested from the called number (specifically, the ESI of the called number).

In the example shown in the figure, the message is sent to the CO S/R 206, although this is optional in the invention. In step 218, the CO S/R 206 responds to the data transfer device with a UNI call processing message. In step 220 the UBR Setup join message is forwarded to the HE S/R 208, of course after signal handling by the CO S/R.

The invention then rejects the call, namely, the same call that includes the Setup message. In the invention, the HE rejects the received UBR Setup message via a Release Complete message. In more detail, the HE S/R 208 sends a release complete message to the CO S/R 206 in step 222. In turn, the CO S/R 206 sends a release message to the data transfer device 204 in step 224. In step 226, the data transfer device 204 informs the CO S/R 206 that the release, i.e., rejection of the call, is complete.

In the next series of steps, the invention establishes the connection backwards toward the leaf that initiated the join request. In step 228, the HE S/R 208 generates an add party message (Or a point to multipoint Setup message if this is the first instance of this broadcast being established between devices 208 and 206). As previously indicated, the add party message is constructed using the routing information embedded in the initiating UBR Setup message as indicated by the broken line labeled 230. Then, in step 232, the CO S/R 206 sends a Setup message of its own to the data transfer device 204 requesting setup of the new call.

In step 234, the data transfer device 204 returns a call proceeding message indicating that the call request is proceeding: In step 236, the data transfer device 204 further sends a call connect signal to the CO S/R 206 when the call has been received at the leaf end. In step 238, the CO S/R 206 sends an add party acknowledge signal to the HE S/R 208 indicating that the add party request was successful and also the CO S/R 206 sends the data transfer device 204 a connect acknowledge signal to inform the data transfer device 204 that the connection is established. With that, the add party operation is complete.

As earlier mentioned, the invention inserts the routing information into an ATM signal, such as an IE. This will now be explained in greater detail. Given that the data transfer device knows the HE S/R address network prefix, for example, the value used is NETWORK PREFIX = 39-1111-223344556677889900-01, and the CO S/R address network prefix, e.g., 39-1111-223344556677889900-02, the data transfer device constructs the ATM End System Address (AESA) to be, for example, the network prefix followed by the channel and the unused selector thereafter. For example, the channel in terms of Class D Group Address assignments can be:
broadcast channel 7 = 225.0.0.7
broadcast channel 8 = 225.0.0.8
broadcast channel 9 = 225.0.0.9

Therefore, every Accession can combine the HE S/R address prefix and the broadcast channel Class D Group Address to create a called party IE:

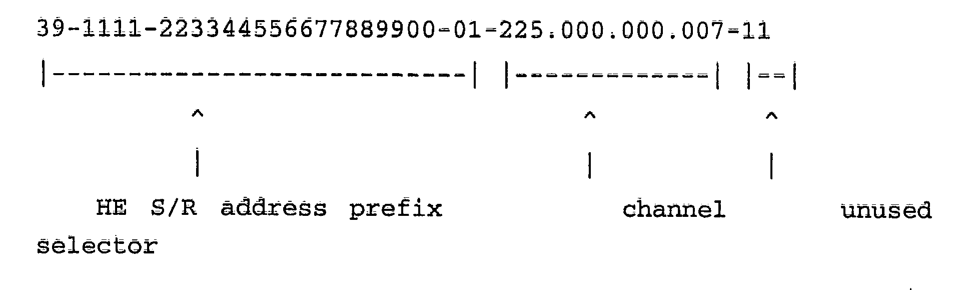

Once the invention establishes a leaf initiated join broadcast connection, additional parties can download the currently broadcast video stream. This is done by executing the add party command described above. Of course, the routing information will be different, although the channel may be the same.

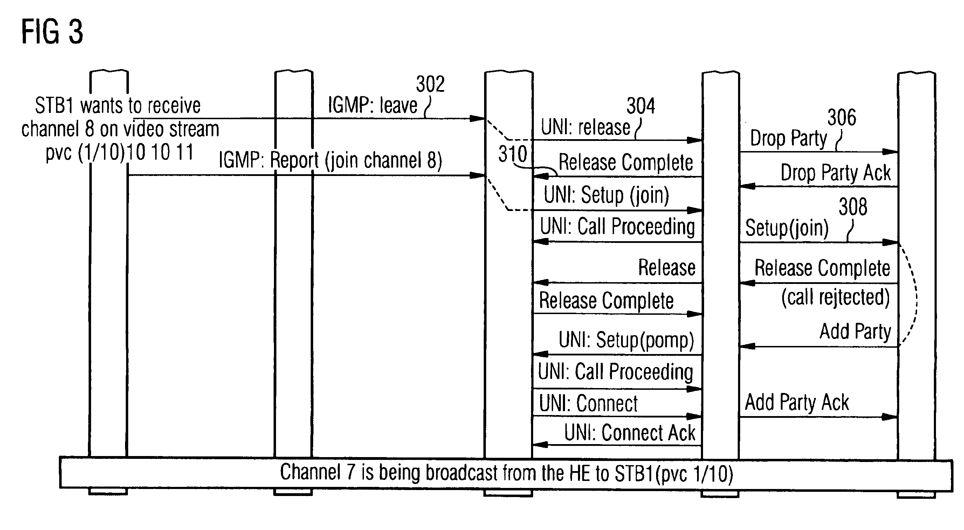

Figure 3 illustrates the removal or drop of a channel. Assume now that a user decides to end receiving a video stream, i.e., channel, such as when changing channels or turning off the TV. In this case, the STB sends a leave message to the data transfer device in step 302. In turn, the data transfer device requests a release to the CO S/R in step 304, which sends a drop party message to the HE S/R. In response, the HE S/R drops the party and returns a drop party acknowledge signal to the CO S/R in step 308. In step 310, the CO S/R confirms the release is complete by sending a release complete signal to the data transfer device.

As mentioned previously, the prior solutions were insufficient because they were not scalable, which is problematic for point-to-multipoint connections because parties can be added easily, overwhelming the system. Nor were they able to configure an efficient bandwidth, problematic because the system considered here cannot handle the typical PVC bandwidth configuration. The present invention provides a scalable solution, as well as a solution that configures and efficiently uses bandwidth.

The invention proposes to use point-to-multipoint switched virtual circuits (P2MP SVCs). The invention configures the SVCs such that the network bandwidth allocation is efficient. In a network, a switched virtual circuit (SVC) is a temporary virtual circuit that is established and maintained only for the duration of a data transfer session. Unlike a permanent virtual circuit (PVC), the SVC is not permanently dedicated. Thus, the SVC can be reconfigured, according to the invention, to be more efficient so that the underlying system can support the video streams. In addition, SVCs are temporary and can be added or removed according to the needs of the network.

In order to establish the video streams for efficiently, the invention selects certain parameters which have an effect on the ATM core network resource reservation.

In the particular example network discussed, Table I is provided below that sets the forward peak rate and backward peak rate. Thus, the broadcast requests do not reserve any bandwidth resources. The optimum settings for the network here are given in the table.

**Table I**

| **OCTET** | **IE FIELD** | **FIELD VALUE** |
|---|---|---|
| 7 | Forward peak cell rate Identifier (CLP = 0 + 1) | 1000 0100 |
| 7.1 | Forward peak | 0000 0000 |
| 7.2 | cell rate | 0000 0000 |
| 7.3 | (CLP = 0 + 1) | 0000 0000 (0 cells/sec) |
| 8 | Forward peak cell rate Identifier (CLP = 0 + 1) | 1000 0101 |
| 8.1 | Backward peak | 0000 0000 |
| 8.2 | cell rate | 0000 0000 |
| 8.3 | (CLP = 0 + 1) | 0000 0000 (0 cells/sec) |
| 18 | Best Effort Indicator | 1011 1110 |

In addition, or in the alternative, the invention defines the calling party number. In one aspect, the calling party number is formed in accordance with the UNI 4.0 standard. As explained, the calling party number is encoded to indicate the data transfer device AESA, e.g.39-1111-223344556677889900-02-012.345.678.911-11. This is done in the invention in order to avoid the system from having to locate the data transfer device AESA on its own, which would consume more system resources and further burden the system.

In addition, or in the alternative, the invention defines the called party number. In one aspect, the called party number is formed in accordance with the UNI 4.0 standard. As explained, the called party number is encoded to indicate the HE S/R channel AESA, e.g. 39-1111-223344556677889900-01-225.000.000.007-11 = channel 7. This is done in the invention in order to avoid the system from having to locate the HE S/R AESA on its own, which would consume more system resources and further burden the system.

It was mentioned that the invention, owing to the ATM protocol, allows the QoS to be defined. In the Table II, below, there is shown an example of the QoS parameter fields that can be set.

**Table II**

| **OCTET** | **IE FIELD** | **FIELD VALUE** |
|---|---|---|
| 5 | QOS-class forward | 0000 0000 (Unspecified QoS class) |
| 6 | QOS-class backward | 0000 0000 (Unspecified QoS class) |

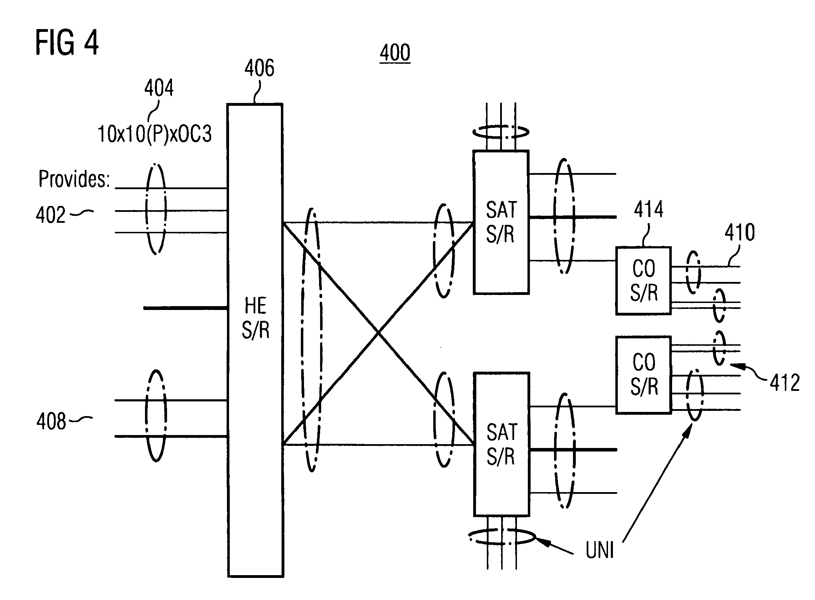

The present invention also resolves the problem of scalability. Such a large-scale deployment bearer network architecture 400 is shown in Figure 4. There may be hundreds or thousands of content PVCs 402 over multiple interfaces 404 on the HE S/R 406. Content PVCs may also be provided at other S/R 408 within the network. This scales to 2, 074 Accessions and 464,576 STB users, which, of course is not the maximum nor minimum size of the network. Optionally, the same network being served by a single S/R at the HE 406.

With the present invention, the multicasting of one of the content PVCs via Point-to-multipoint (P2MP) SVCs is completely scalable. If the top data transfer device 410 requested the content first followed by the bottom data transfer device 412, the connection from the HE to the top device 410 would be made when the HE S/R 406 received the first request. The connection from the CO S/R to the bottom device 412 is made when the bottom device requested the content from the HE S/R 406, and so on. As each additional CO S/R 414 is added, so too are the SVCs. Upon request of access from a particular CO S/R, the invention provides the above procedures for a leaf initiated join broadcast connection.

While the present invention has been described with reference to specific examples, standards and values, the invention is not so limited, but covers the broader concept of leaf initiated join broadcast connection.

## Claims

1. A method for establishing a leaf initiated point-to-multi-point connection within an ATM network via ATM signaling, the steps comprising:
sending a Setup message to from the leaf to an Root to request to join a known multi-point connection;
inserting into the Setup message routing information for routing the Setup message to the Root and routing information for routing back to the to the leaf;
originating by the Root a point to multi-point call to the leaf using the routing information inserted into the leaf initiated Setup message; and
rejecting the leaf initiated Setup message by the Root.

2. The method according to claim 1, further comprising the step of the including in the Setup message a traffic descriptor encoded to indicate a unspecified bit rate UBR.

3. The method according to claim 1, further comprising the step of including in the Setup message a calling number to indicate the user requesting broadcast.

4. The method according to claim 1, further comprising the step of including in the Setup message a called number to indicate desired broadcast.

5. The method according to claim 1, further comprising the step of originating from the Root a point-to-multi-point call to the leaf.

6. The method according to claim 1, further comprising the step of initiating a request for access to a broadcast channel.

7. The method according to claim 6, wherein the step of initiating forms an Internet Protocol IP request for access to a broadcast channel.

8. The method according to claim 1, further comprising the step of adding another leaf that receives the point-to-multipoint connection established.

9. The method according to claim 1, further comprising the step of removing the leaf from the point-to-multipoint connection:

10. An apparatus for establishing a leaf initiated point-to-multi-point connection within an ATM network via ATM signaling, the apparatus comprising:
a leaf for generating a Setup message to request to join a known multi-point connection;
wherein the leafs inserts are adapted to into the Setup message routing information for routing back to the leaf;
a Root for receives the Setup message and originating a point to multi-point call to the leaf using the routing information inserted into the Setup message; and
wherein the Root reject is adapted to the Setup message.

11. The apparatus according to claim 10, wherein the Setup message includes a traffic descriptor encoded to indicate UBR.

12. The apparatus according to claim 10, wherein the Setup message includes a calling number to indicate user requesting broadcast.

13. The apparatus according to claim 10, wherein the Setup message includes a called number to indicate desired broadcast.

14. The apparatus according to claim 10, wherein the Root originate a point-to-multi-point call to the leaf.

15. The apparatus according to claim 10, wherein the Root initiate a request for access to a broadcast channel.

16. The apparatus according to claim 15, wherein the request for access to a broadcast channel conforms to an internet Protocol IP.

17. The apparatus according to claim 10, further comprising the another leaf that receive the point-to-multipoint connection established.

18. The apparatus according to claim 10, wherein the Root includes a head end switch router (HE S/R).

19. The apparatus according to claim 10, wherein the data transfer device is an Accession.

20. The apparatus according to claim 10, further comprising a central office switch router (CO S/R).

## Patentansprüche

1. Verfahren für den Aufbau einer per Blatt initiierten Punkt-zu-Mehrpunktverbindung in einem ATM-Netzwerk durch eine ATM-Signalisierung mit den Schritten:
Senden einer Setup-Nachricht vom Blatt zu einer Wurzel, um die Verbindung zu einer bekannten Mehrpunktverbindung anzufordern;
Einfügen in die Setup-Nachricht von Routinginformation für das Routing der Setup-Nachricht zur Wurzel und von Routinginformation für das Rückrouting zum Blatt;
Erzeugen durch die Wurzel eines Punkt-zu-Mehrpunkt-Rufs zum Blatt mittels der Routinginformation, die in die vom Blatt initiierte Setup-Nachricht eingefügt wird; und
Ablehnen der vom Blatt initiierten Setup-Nachricht durch die Wurzel.

2. Verfahren nach Anspruch 1, ferner umfassend den Schritt des Einbeziehens eines Verkehrsdeskriptors in die Setup-Nachricht, der zur Angabe einer unspezifizierten Bitrate UBR codiert ist.

3. Verfahren nach Anspruch 1, ferner umfassend den Schritt des Einbeziehens einer rufenden Nummer in die Setup-Nachricht, um den Broadcast anfordernden Benutzer anzugeben.

4. Verfahren nach Anspruch 1, ferner umfassend den Schritt des Einbeziehens einer gerufenen Nummer in die Setup-Nachricht, um den gewünschten Broadcast anzugeben.

5. Verfahren nach Anspruch 1, ferner umfassend den Schritt des Erzeugens eines Punkt-zu-Mehrpunkt-Rufs von der Wurzel zum Blatt.

6. Verfahren nach Anspruch 1, ferner umfassend den Schritt des Initiierens einer Abfrage für den Zugriff auf einen Broadcast-Kanal.

7. Verfahren nach Anspruch 1, wobei der Schritt des Initiierens eine Internet-Protokoll- bzw. IP-Abfrage für den Zugriff auf einen Broadcast-Kanal bildet.

8. Verfahren nach Anspruch 1, ferner umfassend den Schritt des Hinzufügens eines anderen Blatts, das die aufgebaute Punkt-zu-Mehrpunkt-Verbindung empfängt.

9. Verfahren nach Anspruch 1, ferner umfassend den Schritt des Entfernens des Blatts von der Punkt-zu-Mehrpunkt-Verbindung.

10. Vorrichtung zum Aufbau einer per Blatt initiierten Punkt-zu-Mehrpunkt-Verbindung in einem ATM-Netzwerk durch ATM-Signalisierung, wobei die Vorrichtung umfasst:
ein Blatt, das eine Setup-Nachricht generiert, um den Beitritt zu einer bekannten Mehrpunktverbindung anzufordern;
wobei die Blätter angepasst sind, um Routinginformation der Setup-Nachricht für das Rückrouting zum Blatt einzufügen;
eine Wurzel zum Empfang der Setup-Nachricht und Erzeugen eines Punkt-zu-Mehrpunkt-Rufs zum Blatt mittels der in die Setup-Nachricht eingefügten Routinginformation; und
wobei die Wurzel angepasst ist, die Setup-Nachricht abzulehnen.

11. Vorrichtung nach Anspruch 10, wobei die Setup-Nachricht einen Verkehrsdeskriptor aufweist, der zur Angabe der UBR codiert ist.

12. Vorrichtung nach Anspruch 10, wobei die Setup-Nachricht eine rufende Nummer aufweist, um den Broadcast anfordernden Benutzer anzugeben.

13. Vorrichtung nach Anspruch 10, wobei die Setup-Nachricht eine angerufene Nummer aufweist, um den gewünschten Broadcast anzugeben.

14. Vorrichtung nach Anspruch 10, wobei die Wurzel angepasst ist, um einen Punkt-zu-Mehrpunkt-Ruf zum Blatt zu erzeugen.

15. Vorrichtung nach Anspruch 10, wobei die Wurzel angepasst ist, um eine Anfrage für den Zugriff auf einen Broadcast-Kanal zu initiieren.

16. Vorrichtung nach Anspruch 15, wobei die Anfrage für den Zugriff auf einen Broadcast-Kanal einem Internet-Protokoll IP, entspricht.

17. Vorrichtung nach Anspruch 10, ferner umfassend das andere Blatt, das angepasst ist, um die Punkt-zu-Mehrpunkt-Verbindung aufzubauen.

18. Vorrichtung nach Anspruch 10, wobei die Wurzel einen Kopf- und einen Switch-Router (HE S/R) aufweist.

19. Vorrichtung nach Anspruch 10, wobei die Datentransfervorrichtung ein Zugang ist.

20. Vorrichtung nach Anspruch 10, ferner umfassend einen Switch-Router der Vermittlungsstelle (CO S/R).

## Revendications

1. Procédé pour établir une connexion point à multipoint initiée par un noeud terminal au sein d'un réseau ATM par l'intermédiaire d'une signalisation ATM, les étapes comprenant :
l'envoi d'un message de mise en liaison à partir du noeud terminal vers une Racine pour demander de relier une connexion multipoint connue ;
l'insertion dans le message de mise en liaison d'informations d'acheminement pour acheminer le message de mise en liaison vers la Racine et d'informations d'acheminement pour le réacheminement vers le noeud terminal ;
produire par la Racine un appel point à multipoint vers le noeud terminal en utilisant les informations d'acheminement insérées dans le message de mise en liaison initié par le noeud terminal ; et
rejeter le message de mise en liaison, initié par le noeud terminal, par la Racine.

2. Procédé selon la revendication 1, comprenant en outre l'étape d'inclusion dans le message de mise en liaison d'un descripteur de trafic codé pour indiquer un débit binaire non spécifié UBR.

3. Procédé selon la revendication 1, comprenant en outre l'étape d'inclusion dans le message de mise en liaison d'un numéro d'appel pour indiquer la diffusion de demande de l'utilisateur.

4. Procédé selon la revendication 1, comprenant en outre l'étape d'inclusion dans le message de mise en liaison d'un numéro appelé pour indiquer une diffusion désirée.

5. Procédé selon la revendication 1, comprenant en outre l'étape de production depuis la Racine, d'un appel point à multipoint vers le noeud terminal.

6. Procédé selon la revendication 1, comprenant en outre l'étape d'engagement d'une demande pour accéder à un canal de diffusion.

7. Procédé selon la revendication 6, dans lequel l'étape d'engagement forme une demande de protocole Internet IP, pour accéder à un canal de diffusion.

8. Procédé selon la revendication 1, comprenant en outre l'étape d'addition d'un autre noeud terminal qui reçoit la connexion point à multipoint établie.

9. Procédé selon la revendication 1, comprenant en outre l'étape de suppression du noeud terminal à partir de la connexion point à multipoint.

10. Appareil pour établir une connexion point à multipoint initiée par un noeud terminal au sein d'un réseau ATM par l'intermédiaire d'une signalisation ATM, l'appareil comprenant :
un noeud terminal qui génère un message de mise en liaison pour demander de joindre une connexion multipoint connue ;
dans lequel les noeuds terminaux sont adaptés pour insérer dans le message de mise en liaison des informations d'acheminement pour le réacheminement vers le noeud terminal ;
une Racine pour recevoir le message de mise en liaison et produire un appel point à multipoint vers le noeud terminal utilisant les informations d'acheminement insérées dans le message de mise en liaison ; et
dans lequel la Racine est adaptée pour rejeter le message de mise en liaison.

11. Appareil selon la revendication 10, dans lequel le message de mise en liaison comprend un descripteur de trafic codé pour indiquer un débit binaire non spécifié.

12. Appareil selon la revendication 10, dans lequel le message de mise en liaison comprend un numéro d'appel pour indiquer une diffusion de demande utilisateur.

13. Appareil selon la revendication 10, dans lequel le message de mise en liaison comprend un numéro appelé pour indiquer une diffusion désirée.

14. Appareil selon la revendication 10, dans lequel la Racine est adaptée pour produire un appel point à multipoint vers le noeud terminal.

15. Appareil selon la revendication 10, dans lequel la Racine est adaptée pour émettre une demande pour accéder à un canal de diffusion.

16. Appareil selon la revendication 15, dans lequel la demande d'accès à un canal de diffusion est conforme à un protocole Internet IP.

17. Appareil selon la revendication 10, comprenant en outre l'autre noeud terminal qui est adapté pour recevoir la connexion point à multipoint établie.

18. Appareil selon la revendication 10, dans lequel la Racine comprend un commutateur-routeur tête de réseau (HE S/R).

19. Appareil selon la revendication 10, dans lequel le dispositif de transfert de données est une Consultation.

20. Appareil selon la revendication 10, comprenant en outre un commutateur-routeur de central téléphonique (CO S/R).
